# FASCICULE DE BREVET EUROPEEN

(11) **EP 0 991 987 B1**
(45) Date de publication et mention de la délivrance du brevet: **17.09.2003**
(21) Numéro de dépôt: 98933743.1
(22) Date de dépôt: 26.06.1998
(51) Int. Cl.: G05B 23/02

(54) **DISPOSITIF DE CONTROLE D'UNE INSTALLATION**
VORRICHTUNG ZUR REGELUNG EINER ANLAGE
DEVICE FOR CONTROLLING AN INSTALLATION

(30) Priorité: 26.06.1997 FR 9708030
(43) Date de publication de la demande: 12.04.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: FERENCZI, Laurent, F-75018 Paris (FR); BACOT, Patrick, F-92190 Meudon (FR); ORESVE, Bertrand, F-75015 Paris (FR)
(74) Mandataire: Blot, Philippe Robert Emile
(86) Numéro de dépôt international: FR9801373
(87) Numéro de publication internationale: WO99000715

(56) Documents cités:
- EP-A- 0 378 465
- EP-A- 0 774 701
- WO-A-90/16048
- DE-A- 4 325 860
- GB-A- 2 247 757
- GB-A- 2 274 521
- US-A- 5 586 038

## Description

L'invention concerne un dispositif de contrôle d'une installation, comportant des moyens de surveillance et/ou de commande du fonctionnement de ladite installation, et une unité centrale reliée auxdits moyens de surveillance et/ou de commande pour relever, envoyer et/ou traiter des informations concernant le fonctionnement de l'installation.

On connaît des dispositifs de contrôle pour surveiller et commander le fonctionnement des installations autonomes telles que par exemple des générateurs d'azote équipés d'un réservoir d'azote liquide de secours.

Un tel dispositif connu comprend d'une part des moyens de mesure de paramètres relatifs au fonctionnement de l'installation, comme par exemple un capteur de niveau ou un dispositif de surveillance du générateur, ainsi que des moyens de commande destinés à agir sur le fonctionnement de l'installation en fonction des résultats de mesure, et d'autre part un automate programmé, relié à chacun desdits moyens de mesure et de commande.

L'automate comprend des moyens de communication permettant par exemple la transmission d'un signal d'alerte vers un centre de surveillance à distance d'un fournisseur pour déclencher le réapprovisionnement du réservoir ou pour alerter le fournisseur d'un dysfonctionnement du générateur qu'il a mis à disposition de son client.

A cet effet, l'automate est programmé de telle sorte qu'il exécute un certain nombre de tâches pour relever, envoyer et/ou traiter des informations relatives au fonctionnement de l'installation.

De tels tâches comprennent par exemple le relevé de valeurs de mesure délivrées par les capteurs, la comparaison des valeurs mesurées avec des seuils prédéfinis pour détecter des alarmes à déclencher ou le déclenchement de procédures d'alarme consistant à transmettre les alarmes à un centre de surveillance à distance du fournisseur.

Ces dispositifs de contrôle connus présentent l'inconvénient que chaque automate est adapté de façon spécifique à une installation particulière. Cette adaptation de l'automate concerne aussi bien sa structure électrique et/ou électronique que les tâches à exécuter de sorte que deux automates destinés à contrôler le fonctionnement de deux installations de types différents ne peuvent pas être interchangés.

Par conséquent, un fournisseur qui met à la disposition de ses clients des installations de types différents nécessitant chacune un dispositif de contrôle spécifiquement adapté, doit engager des frais importants pour le développement et la fabrication de ces derniers.

De plus, une fois installé, un tel dispositif de contrôle connu manque de souplesse d'utilisation car, pour ajouter à posteriori des capteurs de mesure et/ou des transducteurs de commande en vue d'affiner le contrôle de l'installation ou en vue de surveiller un nouveau module intégré ultérieurement dans l'installation, il est généralement nécessaire de remplacer l'automate du dispositif par un autre.

La présente invention vise à pallier ces divers inconvénients en proposant un dispositif de contrôle d'une installation qui procure une plus grande souplesse quant à l'adaptation à des installations de types différents et qui permette d'être adapté ultérieurement afin de pouvoir surveiller et/ou commander par exemple un nouveau module supplémentaire de l'installation.

A cet effet, l'invention a pour objet un dispositif de contrôle d'une installation, comportant des moyens de surveillance et/ou de commande du fonctionnement de ladite installation, et une unité centrale de traitement d'informations, adapté pour communiquer avec lesdits moyens de surveillance et/ou de commande pour relever, envoyer et/ou traiter des informations concernant le fonctionnement de l'installation, caractérisé en ce que l'unité centrale comprend un moyen de mémorisation d'au moins une tâche paramétrée agissant sur lesdites informations concernant le fonctionnement de l'installation, un moyen de mémorisation d'au moins une table, chaque table étant associée à une tâche paramétrée et comportant des valeurs des paramètres de la tâche considérée pour l'exécution de celle-ci, et, reliés à chaque moyen de mémorisation, des moyens d'exécution desdites tâches paramétrées en utilisant lesdites valeurs mémorisées dans ladite ou lesdites tables lors de l'exécution desdites tâches paramétrées.

Le dispositif selon l'invention peut de plus comporter une ou plusieurs des caractéristiques suivantes :
- au moins une valeur d'un paramètre d'une tâche paramétrée est un pointeur,
- il comprend, reliée aux moyens d'exécution des tâches, une mémoire d'un ordre selon lequel les tâches paramétrées doivent être exécutées en boucle fermée et définissant une tâche générale de contrôle,
- une tâche paramétrée comprend des requêtes de relevé d'informations par lesdits moyens de surveillance et/ou de commande du fonctionnement de ladite installation,
- une tâche paramétrée comprend des commandes destinées auxdits moyens de surveillance et/ou de commande,
- il comprend des moyens de stockage d'un historique d'informations relevées par les moyens de surveillance et/ou de commande, et au moins une tâche paramétrée comprend la mémorisation de ces informations dans les moyens de stockage,
- au moins une tâche paramétrée comprend l'activation d'une procédure d'alarme,
- il comprend des moyens de communication adaptés pour échanger des informations relatives au fonctionnement de l'installation avec au moins un centre de surveillance à distance de ladite installation et une tâche paramétrée comprend la transmission d'informations,
- la tâche paramétrée de transmission d'informations comprend la transmission d'au moins une alarme,
- les moyens de communication comprennent des moyens de sélection des informations à envoyer,
- lesdits moyens de sélection comprennent des moyens d'exécution d'un algorithme mathématique de comparaison des informations à envoyer avec les informations correspondantes qui sont disponibles dans le ou chaque centre de surveillance et des moyens d'inhibition d'une transmission d'informations commandés par lesdits moyens d'exécution de l'algorithme mathématique de comparaison,
- l'unité centrale comprend des moyens d'exécution de tâches programmées et au moins une tâche paramétrée fait appel à au moins une tâche programmée,
- les moyens d'exécution des tâches programmées sont reliés aux moyens de stockage d'informations pour exécuter des opérations sur les informations stockées dans ceux-ci,
- il comporte un micro-ordinateur comprenant une mémoire pour mémoriser lesdites tables et tâches paramétrées, et au moins une interface de couplage auxdits moyens de surveillance et/ou de commande du fonctionnement de ladite installation ainsi qu'une interface de communication avec le ou chaque centre de surveillance à distance, et dans lequel est chargé un programme adapté d'une part pour exécuter les tâches programmées et les tâches paramétrées en utilisant lesdites valeurs paramétrées mémorisées dans ladite ou lesdites tables, et d'autre part pour sélectionner les informations à envoyer.

D'autres caractéristiques et avantages de l'invention ressortiront de la description suivante, donnée à titre d'exemple sans caractère limitatif en regard des dessins annexés, sur lesquels :
La figure 1 est un schéma synoptique d'une installation frigorifique équipée d'un dispositif de contrôle selon l'invention, et
La figure 2 est une vue schématique d'un exemple de tables de valeurs de paramètres associées à des tâches paramétrées.

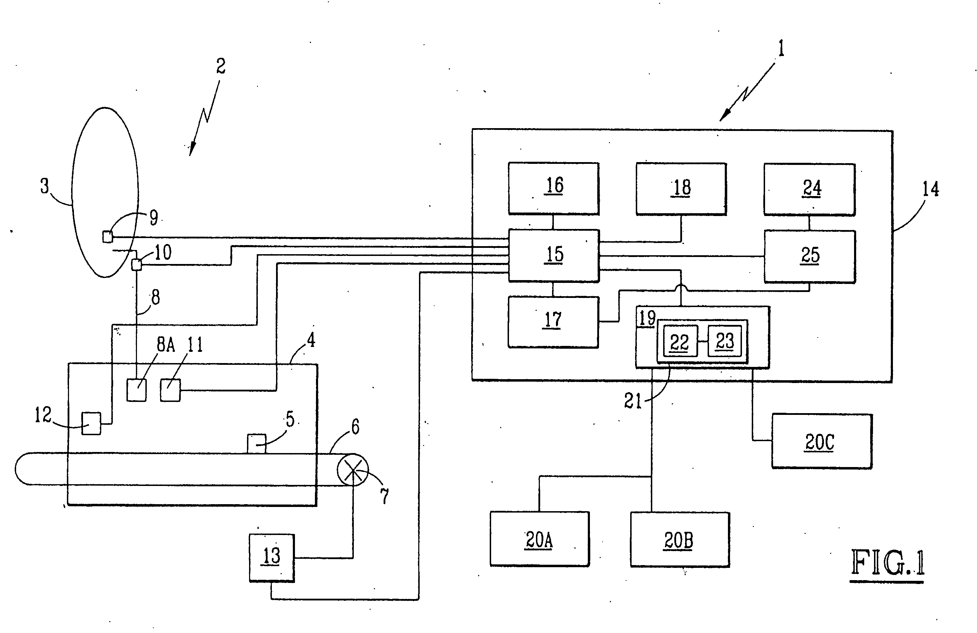

Sur la figure 1 est représenté un dispositif de contrôle 1 qui est installé sur une installation 2 en vue du contrôle du fonctionnement de celle-ci. Par "contrôle", on entend d'une part la surveillance et d'autre part la commande de l'installation 2. A titre d'exemple, l'installation 2 est une installation frigorifique destinée à la congélation ou surgélation de produits alimentaires.

Cette installation 2, représentée schématiquement, comprend un réservoir 3 d'azote liquide et un tunnel de congélation 4 dans lequel se déplacent des produits 5 à congeler sur une bande 6 entraînée par un moteur 7 dans le sens de la flèche 7A. Le réservoir 3 est relié au tunnel 4 par un conduit 8 dont l'extrémité débouchant dans le tunnel porte un vaporisateur 8A d'azote liquide. En fonctionnement, une quantité prédéfinie d'azote liquide est injectée dans le tunnel 4 pour congeler les produits 5.

D'une part, le dispositif de contrôle 1 comprend divers moyens 9 à 13 de surveillance et de commande du fonctionnement de l'installation frigorifique 2 à savoir un capteur 9 du niveau de stockage de l'azote liquide contenu dans le réservoir 3, un capteur 10 du débit d'azote liquide alimentant le tunnel 4, qui est installé dans le conduit 8, et deux capteurs 11 et 12 de la température régnant dans le tunnel 4 qui sont disposés respectivement au niveau du vaporisateur 8A et au niveau de la sortie du tunnel 4. De plus, il comprend une unité 13 de régulation du moteur 7 pour modifier la vitesse de défilement de la bande 6 et, par conséquent le temps de séjour des produits 5 dans le tunnel 4.

Le capteur 9 est par exemple un capteur de pression différentielle, et le capteur 10 est un débimètre à effet Vortex. Les capteurs 11 et 12 sont par exemple des sondes de température au platine de type PT100.

Les signaux fournis par les moyens 9 à 13 peuvent être de tout type adapté. Par exemple, les capteurs 9 et 10 sont du type à délivrer un signal de mesure analogique d'intensité comprise entre 4 et 20 mA tandis que les capteurs 11 et 12 sont du type à délivrer un signal de mesure numérique.

D'autre part, le dispositif 1 comprend une unité centrale 14 reliée à chacun des moyens 9 à 13 de surveillance et de commande pour relever, envoyer et/ou traiter des informations relatives au fonctionnement de l'installation 2.

A cet effet, l'unité 14 comprend des moyens 15 d'exécution de tâches paramétrées, et, reliés à ceux-ci, un moyen 16 de mémorisation de ces tâches paramétrées ainsi qu'un moyen de mémorisation 17 de tables de valeurs des paramètres associées aux tâches paramétrées. Les moyens 15 comportent en outre des entrées/sorties qui sont reliées à chacun des moyens 9 à 13 de surveillance et de commande.

Les moyens 15 comportent par exemple un micro-controleur ou un micro-processeur. Les moyens de mémorisation 16 sont soit un disque dur, soit une mémoire de type flash-EPROM. Le moyen 17 de mémorisation est par exemple un disque dur ou une mémoire de type RAM statique.

Comme cela sera décrit plus en détail ci-dessous, les valeurs des paramètres sont par exemple des noms de variables, des chiffres tels que par exemple un seuil d'alerte, des opérateurs arithmétiques ou tout autre information relative à un paramètre d'une tâche paramétrée et nécessaire à son exécution.

Par ailleurs, l'unité 14 comprend, reliée aux moyens d'exécution 15, une mémoire 18, par exemple de type RAM, destinée à la mémorisation d'un ordre de tâches paramétrées selon lequel les tâches doivent être exécutées en boucle fermée et définissant une tâche générale de contrôle continu de l'installation 2.

Afin qu'un fournisseur puisse exercer à distance le contrôle de l'installation 2, l'unité centrale 14 est en outre équipée de moyens 19 de communication reliées aux moyens 15 d'exécution et adaptés pour échanger des informations relatives au fonctionnement de l'installation 2, telles que des valeurs de mesure ou des alarmes, avec différents centres 20A et 20B de surveillance à distance du fournisseur, spécialisés chacun dans un aspect de contrôle de l'installation 2. Le centre 20A est par exemple spécialisé dans la surveillance et la commande de la température régnant dans le tunnel 4 et/ou la vitesse du convoyeur le traversant tandis que le centre 20B est spécialisé dans la surveillance du niveau de stockage d'azote liquide dans le réservoir 3. Les centres 20A et 20B sont reliés aux moyens de télécommunication 19 par le réseau téléphonique fixe ou mobile. De plus, les moyens 19 sont adaptés pour communiquer avec un poste 20Cd'interrogation de l'état de fonctionnement de l'installation 2, qui est disposé chez le client à proximité de l'installation 2 par liaison filaire ou radio au standard RS485.

Les moyens de télécommunication 19 sont par exemple des ports de communication au standard RS485 ou des MODEM au format PCMCIA ou analogue.

Bien entendu, le contrôle de l'installation 2 peut également être assuré par un seul centre de surveillance à distance, mais la spécialisation se révèle par exemple judicieuse dans le cas ou le fournisseur met à la disposition de ses clients des installations de types différents dont plusieurs comportent un module commun tel qu'un réservoir de stockage d'azote liquide. Dans ce cas, pour des raisons de coordination de livraisons, il est préférable qu'un seul centre soit chargé de la surveillance des niveaux de stockage dans les différents réservoirs et du réapprovisionnement de ceux-ci en cas d'une réception d'une commande de réapprovisionnement pour toutes les installations similaires d'une zone géographique donnée.

La communication de l'unité centrale 14 avec ces centres 20A et 20B du fournisseur s'effectue par exemple via un réseau téléphonique et celle avec le poste 20C via une liaison câblée. Sachant que les réseaux téléphoniques sont vulnérables d'un point de vue ruptures de communication et aussi d'un point de vue qualité de transmission de données, il convient de réduire l'échange d'informations avec chaque centre 20A et 20B au minimum.

A cet effet, les moyens 19 de communication sont équipés de moyens 21 de sélection des informations à envoyer à chaque centre 20A, 20B. Ces moyens 21 comprennent d'une part des moyens 22 d'exécution d'un algorithme mathématique de comparaison d'informations à envoyer avec les informations correspondantes qui sont disponibles dans chaque centre 20A, 20B, et d'autre part des moyens 23 d'inhibition d'une transmission d'informations commandés par lesdits moyens 22.

L'algorithme mathématique de comparaison exécuté par les moyens 22 comprend par exemple une « preuve par 9 ». Dans le cas où la « preuve par 9 » donne pour les informations considérées disponibles dans chaque centre 20A, 20B un résultat identique à celui obtenu lors de l'application de la « preuve par 9 » aux informations à envoyer, les moyens 22 envoient aux moyens 23 un signal d'inhibition de la transmission d'informations. Dans le cas contraire, les moyens 22 envoient aux moyens 23 un signal de désactivation pour permettre la transmission des informations.

L'unité centrale 14 est en outre équipée de moyens 24 de stockage d'informations, tels qu'un disque dur ou une mémoire de type RAM statique. Ces informations sont notamment un historique d'informations, relevées par les moyens 9 à 13 de surveillance et/ou de communication en vue de l'exploitation de ces données pour par exemple une gestion prévisionnelle de l'installation. Les informations stockées dans les moyens 24 constituent une base de données reflétant l'état de l'installation 2, et peuvent être interrogées par les centres 20A et 20B. Par l'intermédiaire de son poste d'interrogation 20C, le client dispose également d'un accès pour interroger sur place, au moins partiellement, les informations stockées dans les moyens 24.

Par ailleurs, l'unité 14 comprend des moyens 25 d'exécution de tâches programmées. Par tâche programmée, on entend une tâche spécifique à l'installation 2 qui ne peut pas être paramétrée parce qu'elle concerne par exemple un traitement particulier d'une valeur de mesure. Les moyens 25 sont reliés aux moyens d'exécution 15 et au moyen 17 de mémorisation des tables pour par exemple changer de façon dynamique la valeur d'un paramètre dans une table selon une tâche programmée spécifique. Une telle tâche programmée concerne par exemple la conversion d'une valeur de tension mesurée en une valeur d'une autre grandeur physique ou l'ajustement d'un intervalle de temps entre deux instants de mesure de température. Il peut s'agir également du résultat de l'intégration par rapport du temps d'un débit qui est compensé par un facteur multiplicatif dépendant de la température afin d'obtenir le volume de gaz équivalent à une température normalisée.

L'exécution d'une tâche programmée est par exemple déclenchée par une tâche paramétrée, suite à la détection d'un événement, à des intervalles de temps prédéterminés ou encore en continu.

Par ailleurs, les moyens 25 d'exécution de tâches programmées sont en outre reliés aux moyens 24 de stockage d'informations pour exécuter des opérations spécifiques sur les informations stockées dans ces moyens 24.

L'unité centrale 14 comporte par exemple un micro-ordinateur équipé d'un ou de plusieurs modems adaptés pour communiquer avec les centres 20A et 20B via un réseau téléphonique et avec le poste 20C via une liaison câblée ou radio, et d'interfaces adaptées pour échanger des informations avec les moyens 9 à 13. Le micro-ordinateur comporte en outre une mémoire pour mémoriser lesdites tables et les tâches paramétrées et un processeur destiné à exécuter avec un partage de temps adapté les tâches paramétrées mais aussi les tâches programmées.

On va expliquer ci-après de façon exemplaire le fonctionnement du dispositif de contrôle à l'aide des capteurs 9 à 12. Pour des moyens de commande, tels que l'unité 13 de régulation du moteur d'entraînement 7, le dispositif 1 fonctionne de façon correspondante.

Une tâche paramétrée mémorisée dans les moyens 16 et devant être exécutée par les moyens 15 concerne l'acquisition, à des intervalles de temps prédéfinis, des valeurs de mesure délivrées par chacun des capteurs 9 à 12.

Cette tâche paramétrée nommée "saisie de valeurs de mesure" se présente par exemple sous la forme suivante :
*Acquérir la valeur de mesure de la variable nommée X relative au capteur connecté en Y qui délivre un signal du type Z, et enregistrer la valeur acquise dans un emplacement de mémoire ayant l'adresse M.*
où
- le paramètre X est le nom d'une variable, telle que N pour le niveau de stockage dans le réservoir 3 relevé par le capteur 9, D pour le débit d'azote liquide circulant dans le conduit 8, T₁ pour la température mesurée par le capteur 11 et T₂ pour la température mesurée par le capteur 12;
- le paramètre Y est l'adresse d'un des capteurs 9 à 12 et correspond à une entrée des moyens 15,
- le paramètre Z indique le type de signal à acquérir, par exemple analogique dans quel cas une conversion en une valeur numérique doit être effectuée par les moyens 15 au moyen d'un convertisseur analogique numérique intégré, ou numérique,
- le paramètre M correspond à une adresse d'un emplacement de mémoire des moyens 24 de stockage dans lequel la valeur saisie doit être enregistrée.

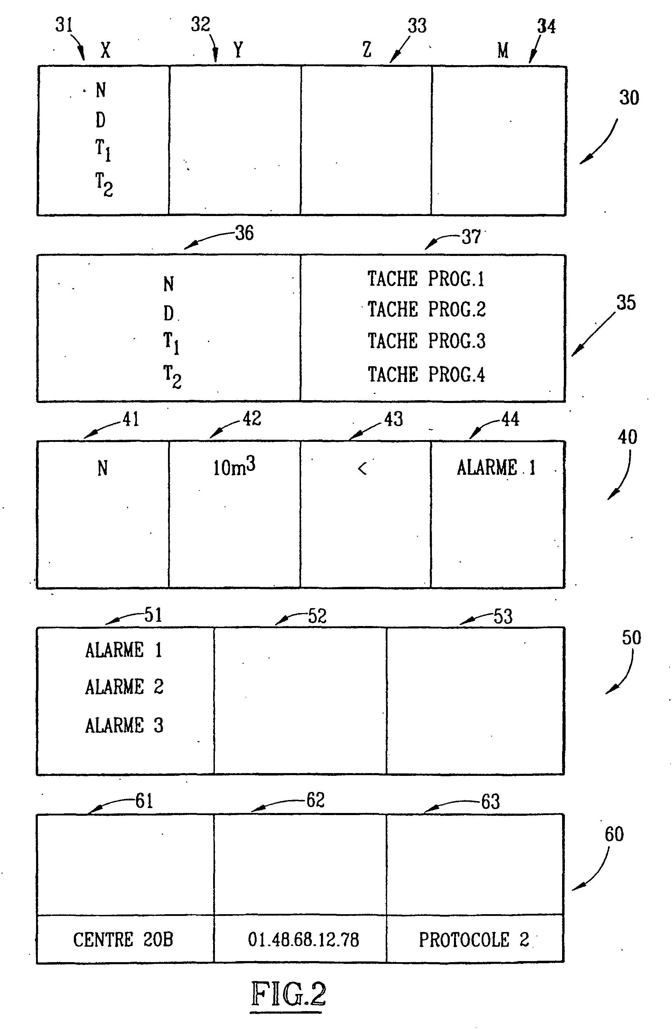

Les valeurs des paramètres X,Y,Z et M sont enregistrées dans les moyens de mémorisation 17 sous la forme d'une table 30 associée à la tâche paramétrée précitée et représentée sur la figure 2.

La table 30 comporte quatre colonnes 31 à 34 ou plus dans lesquelles figurent respectivement les valeurs des paramètres X, Y, Z et M telles qu'elles ont été définies précédemment au sujet de la tâche paramétrée "Acquisition de valeurs de mesure". Chaque ligne de la table 30 est associée à un des capteurs 9 à 12.

Pour exécuter l'acquisition et l'enregistrement de toutes les valeurs de mesure des capteurs 9 à 12, les moyens 15 exécutent la tâche paramétrée précitée en prenant les valeurs des paramètres X, Y, Z et M de la table 30 de chaque ligne, de la première jusqu'à la dernière.

Une telle tâche paramétrée présente l'avantage que dans le cas d'une modification de l'installation à contrôler, par exemple l'installation d'un capteur supplémentaire, le dispositif 1 peut être facilement adapté.

Une telle modification s'effectue de la façon suivante. Après avoir installé le capteur supplémentaire sur l'installation à contrôler et branché une sortie de celui-ci sur une entrée des moyen d'exécution 15, il suffit d'ajouter une ligne correspondante au tableau 30 dans laquelle on déclare les valeurs spécifiques des paramètres du capteur supplémentaire.

Une fois que celles-ci sont déclarées, les moyens 15 exécutent la tâche paramétrée "acquisition des valeurs de mesure" de la première jusqu'à la dernière ligne de la table 30 et prend en compte les valeurs des paramètres du nouveau capteur supplémentaire.

De plus, le dispositif 1 de contrôle s'adapte facilement à tout type d'installation, car les capteurs de mesure et des transducteurs de commande utilisés pour surveiller et/ou commander le fonctionnement d'une installation sont généralement du type à délivrer une tension correspondant à la valeur d'une grandeur physique mesurée, ou à recevoir une tension ou un courant correspondant à une commande de régulation. Pour chaque type d'installation, il suffit de mémoriser la tâche paramétrée "acquisition des valeurs de mesure" dans le moyen 16 et de déclarer pour chaque capteur les valeurs requises des paramètres définis dans une table associée à cette tâche paramétrée et mémorisée dans le moyen 17.

La figure 2 montre à titre d'exemple d'autres tables 35, 40, 50 et 60 associées à d'autres tâches paramétrées. Ainsi, la table 35 est relative au traitement des valeurs de mesures acquises lors de l'exécution de la tâche paramétrée « acquisition de valeurs de mesure » et fait appel à des tâches programmées. La table 35 comprend deux colonnes 36 et 37 dans lesquelles figurent respectivement les noms des variables mesurées et les noms des tâches programmées à déclencher. Les tâches programmées « tâche prog.1 à 4 » sont par exemple des fonctions de conversion des valeurs numériques stockées aux emplacements de mémoire indiqués dans la colonne 34 de la table 30. Avantageusement, ces fonctions prennent en compte les caractéristiques individuelles de chaque capteur. En effet, même deux capteurs identiques comme les capteurs de température 11 et 12, peuvent avoir des courbes d'étalonnage différentes. Ces courbes d'étalonnage sont prises en compte par l'application, à la valeur directement relevée par ces capteurs, d'une tâche programmée spécifique. Par exemple, le niveau de stockage N avait été acquis sous la forme d'une tension délivrée par le capteur 9 et stockée sous une forme numérique à l'emplacement de mémoire portant l'adresse 6 des moyens 24 de stockage. Lors de l'exécution de la première ligne de la tâche paramétrée relative à la table 35, cette valeur de tension est convertie en « m³ » au moyen de la tâche programmée « tâche prog. 1 » qui prend en compte la courbe d'étalonnage du capteur 9, et enregistrée dans l'emplacement de mémoire portant l'adresse 6.

La table 40 est relative à une tâche paramétrée de comparaison des valeurs converties lors de l'exécution de la tâche paramétrée relative à la table 35, à des seuils prédéfinis en vue d'une activation éventuelle d'une procédure d'alarme. La table 40 comporte quatre colonnes 41 à 44 dans lesquelles figurent respectivement les valeurs de paramètres comme le nom de la variable mesurée, un seuil prédéfini, un opérateur arithmétique de comparaison et le nom de variable d'une procédure d'alarme qui prend la valeur "1" si la procédure d'alarme en question doit être activée, et "0" dans le cas d'un résultat négatif de comparaison.

Par exemple dans la première ligne de la table 40, il s'agit de la comparaison du niveau de stockage N du réservoir 3 avec un seuil prédéfini égal à 10m³. Le niveau de stockage N mesuré par le capteur 9 doit être supérieur à 10m³. S'il est inférieur ou égal à 10m³, la variable nommée "alarme 1" prend la valeur "1" et une procédure d'alarme correspondante doit être activée.

La table 50 est relative aux procédures d'alarmes "alarmes 1 à 3" devant être activées en fonction des résultats de comparaison obtenus lors de l'exécution de la tâche paramétrée de comparaison associée à la table 40. La table 50 comporte trois colonnes 51, 52 et 53 . Dans la première colonne 51 figurent le nom de variable de la procédure d'alarme et dans les seconde 52 et troisième 53 colonnes figurent les noms des centres de surveillance à distance qui doivent être appelés en cas d'activation d'une des "alarme 1 à 3".

La table 50 présente la particularité que lors de son exécution, elle fait appel à une "sous-tâche" paramétrée d'appel de chaque centre de surveillance à distance 20A et 20B dont les valeurs des paramètres sont définies dans la table 60. La table 60 comporte trois colonnes 61, 62 et 63 dans lesquelles figurent respectivement les noms des centres à appeler, un numéro de téléphone et un protocole d'échange d'informations.

De préférence, certaines valeurs de paramètres déclarées dans les tables 30, 35, 40, 50 et 60, notamment celles qui sont déclarées dans plusieurs tables à la fois comme les noms des variables de mesure ou les noms de variable des procédures d'alarmes, sont des pointeurs. Ainsi, deux tables relatives à deux tâches paramétrées différentes ont accès à des valeurs communes de paramètres en utilisant le même emplacement de mémoire. Cette façon de déclarer les valeurs des paramètres permet de créer un lien entre ces différentes tables 30, 35, 40, 50 et 60. Ainsi, une modification du nom N est répercutée dans toutes les tables où N apparaît.

A titre d'exemple, les liens entre les tables 30, 35, 40, 50 et 60 pour la surveillance du niveau de stockage N dans le réservoir 3 sont représentés par des flèches 70, 71, 72 et 73. Dans le cas où la valeur N relevée et convertie en « m³ »par le capteur 9 est inférieure à 10m³, l'alarme 1 doit être activée ce qui consiste à transmettre une alarme au centre 20B. La transmission de l'alarme s'effectue en appelant le numéro de téléphone 0148 68 1278 en utilisant le protocole 2.

Avantageusement, on définit une tâche de contrôle continu de l'installation par l'ordre selon lequel les tâches paramétrées doivent être exécutées en boucle fermée, qui est enregistré dans la mémoire 18. Cet ordre consiste par exemple à exécuter d'abord la tâche paramétrée associée à la table 30, puis celles associées aux tables 35 et 40 et enfin celle associée à la table 50 avec la sous-tâche associée à la table 60.

Lors du contrôle de l'installation 2, les moyens d'exécution 15 prennent en compte chaque tâche paramétrée une par une selon cet ordre prédéfini, et chaque tâche est exécutée en prenant en compte, ligne par ligne, les valeurs des paramètres de la table associée à la tâche paramétrée considérée.

Une autre tâche paramétrée comprend par exemple des instructions destinées aux moyens 9 à 13 de surveillance et/ou de commande pour la mémorisation régulière d'informations révélées par les moyens 9 à 13 dans les moyens de stockage 24 de façon à constituer un historique d'informations.

Les informations qui sont enregistrées dans les moyens 24 de stockage peuvent être interrogées à distance par un des centres 20A, 20B du fournisseur ou par le client au moyen du poste d'interrogation 20C.

Lors de la transmission de données telles que des valeurs de mesure, vers un des centres 20A, 20B, les moyens 21 de sélection réduisent les échanges d'informations à envoyer afin de rendre la transmission de données entre le dispositif 1 et chacun des centres 20A, 20B plus fiable.

A cet effet, les moyens 22 appliquent l'algorithme mathématique de comparaison aussi bien aux informations à envoyer qu'aux informations correspondantes mémorisées dans les centres 20A et 20 B. En fonction du résultat de la comparaison, les moyens 22 envoient ou non aux moyens 23 un signal pour inhiber la transmission des informations.

Par exemple en ce qui concerne la valeur de la température T₁, celle-ci n'est envoyée à un des centres 20A, 20B que si la « preuve par 9 » appliquée à la température T1 mémorisée dans les centres 20 A, 20 B donne un résultat différent de celui obtenu lors de l'application de la « preuve par 9 » à la température à envoyer. On présume donc que sa valeur a changé depuis sa dernière transmission.

Avantageusement, une autre tâche paramétrée comprend la transmission de données à des intervalles de temps réguliers à chaque centre 20A, 20B de surveillance à distance. Ces données sont par exemple utilisées par le fournisseur pour la facturation du client.

## Revendications

1. Dispositif (1) de contrôle d'une installation (2), comportant des moyens (9, 10, 11, 12, 13) de surveillance et/ou de commande du fonctionnement de ladite installation (2), et une unité centrale (14) de traitement d'informations, adapté pour communiquer avec lesdits moyens (9, 10, 11, 12, 13) de surveillance et/ou de commande pour relever, envoyer et/ou traiter des informations concernant le fonctionnement de l'installation (2), **caractérisé en ce que** l'unité centrale (14) comprend un moyen de mémorisation (16) d'au moins une tâche paramétrée agissant sur lesdites informations concernant le fonctionnement de l'installation (2), un moyen de mémorisation (17) d'au moins une table (30; 35, 40; 50; 60), chaque table (30; 35, 40; 50; 60) étant associée à une tâche paramétrée et comportant des valeurs des paramètres de la tâche considérée pour l'exécution de celle-ci, et, reliés à chaque moyen (16, 17) de mémorisation, des moyens (15) d'exécution desdites tâches paramétrées en utilisant lesdites valeurs mémorisées dans ladite ou lesdites tables lors de l'exécution desdites tâches paramétrées.

2. Dispositif de contrôle selon la revendication 1, **caractérisé en ce qu'**au moins une valeur d'un paramètre d'une tâche paramétrée est un pointeur.

3. Dispositif de contrôle selon la revendication 1 ou 2, **caractérisé en ce qu'**il comprend, reliée aux moyens (15) d'exécution des tâches, une mémoire (18) d'un ordre selon lequel les tâches paramétrées doivent être exécutées en boucle fermée et définissant une tâche générale de contrôle.

4. Dispositif de contrôle selon l'une quelconque des revendications 1 à 3, **caractérisé en ce qu'**une tâche paramétrée comprend des requêtes de relevé d'informations par lesdits moyens (9, 10, 11, 12, 13) de surveillance et/ou de commande du fonctionnement de ladite installation (2).

5. Dispositif de contrôle selon l'une quelconque des revendications 1 à 4, **caractérisé en ce qu'**une tâche paramétrée comprend des commandes destinées auxdits moyens (9, 10, 11, 12, 13) de surveillance et/ou de commande.

6. Dispositif de contrôle selon l'une quelconque des revendications 1 à 5, **caractérisé en ce qu'**il comprend des moyens (24) de stockage d'un historique d'informations relevées par les moyens (9, 10, 11, 12, 13) de surveillance et/ou de commande, et **en ce qu'**au moins une tâche paramétrée comprend la mémorisation de ces informations dans les moyens de stockage.

7. Dispositif de contrôle selon l'une quelconque des revendications 1 à 6, **caractérisé en ce qu'**au moins une tâche paramétrée comprend l'activation d'une procédure d'alarme.

8. Dispositif de contrôle selon l'une quelconque des revendications 1 à 7, **caractérisé en ce qu'**il comprend des moyens (19) de communication adaptés pour échanger des informations relatives au fonctionnement de l'installation avec au moins un centre (20A, 20B) de surveillance à distance de ladite installation (2) et **en ce qu'**une tâche paramétrée comprend la transmission d'informations.

9. Dispositif de contrôle selon la revendication 8, **caractérisé en ce que** la tâche paramétrée de transmission d'informations comprend la transmission d'au moins une alarme.

10. Dispositif de contrôle selon la revendication 8 ou 9, **caractérisé en ce que** les moyens de communication (19) comprennent des moyens (21) de sélection des informations à envoyer.

11. Dispositif de contrôle selon la revendication 10, **caractérisé en ce que** lesdits moyens (21) de sélection comprennent des moyens (22) d'exécution d'un algorithme mathématique de comparaison des informations à envoyer avec les informations correspondantes qui sont disponibles dans le ou chaque centre de surveillance (20A, 20B) et des moyens (23) d'inhibition d'une transmission d'informations commandés par lesdits moyens (22) d'exécution de l'algorithme mathématique de comparaison.

12. Dispositif de contrôle selon l'une quelconque des revendications 1 à 11, **caractérisé en ce que** l'unité centrale (14) comprend des moyens (25) d'exécution de tâches programmées et **en ce qu'**au moins une tâche paramétrée fait appel à au moins une tâche programmée.

13. Dispositif de contrôle selon la revendication 13, **caractérisé en ce que** les moyens (25) d'exécution des tâches programmées sont reliés aux moyens (24) de stockage d'informations pour exécuter des opérations sur les informations stockées dans ceux-ci.

14. Dispositif de contrôle selon la revendication 12 ou 13, **caractérisé en qu'**il comporte un micro-ordinateur comprenant une mémoire pour mémoriser lesdites tables (30; 35, 40; 50; 60) et tâches paramétrées, et au moins une interface de couplage auxdits moyens de surveillance et/ou de commande du fonctionnement de ladite installation (2) ainsi qu'une interface de communication avec le ou chaque centre (20A, 20B) de surveillance à distance, et dans lequel est chargé un programme adapté d'une part pour exécuter les tâches programmées et les tâches paramétrées en utilisant lesdites valeurs paramétrées mémorisées dans ladite ou lesdites tables, et d'autre part pour sélectionner les informations à envoyer.

15. Procédé de contrôle d'une installation (2), utilisant des moyens (9, 10, 11, 12, 13) de surveillance et/ou de commande du fonctionnement de ladite installation (2), et une unité centrale (14) de traitement d'informations, adapté pour communiquer avec lesdits moyens (9, 10, 11, 12, 13) de surveillance et/ou de commande pour relever, envoyer et/ou traiter des informations concernant le fonctionnement de l'installation (2), **caractérisé en ce qu'**il comporte les étapes de :
- mémoriser, dans l'unité centrale (14), au moins une tâche paramétrée agissant sur lesdites informations concernant le fonctionnement de l'installation (2),
- mémoriser dans l'unité centrale (14) au moins une table (30; 35, 40; 50; 60), chaque table (30; 35, 40; 50; 60) étant associée à une tâche paramétrée et comportant des valeurs des paramètres de la tâche considérée pour l'exécution de celle-ci, et,
- exécuter lesdites tâches paramétrées en utilisant lesdites valeurs mémorisées dans ladite ou lesdites tables lors de l'exécution desdites tâches paramétrées.

16. Procédé de contrôle selon la revendication 15, **caractérisé en ce qu'**au moins une valeur d'un paramètre d'une tâche paramétrée est un pointeur.

17. Procédé de contrôle selon la revendication 15 ou 16, **caractérisé en ce qu'**une tâche paramétrée comprend des requêtes de relevé d'informations par lesdits moyens (9, 10, 11, 12, 13) de surveillance et/ou de commande du fonctionnement de ladite installation (2).

18. Procédé de contrôle selon l'une quelconque des revendications 15 à 17, **caractérisé en ce qu'**une tâche paramétrée comprend des commandes destinées auxdits moyens (9, 10, 11, 12, 13) de surveillance et/ou de commande.

19. Procédé de contrôle selon l'une quelconque des revendications 15 à 18, **caractérisé en ce qu'**il comprend une étape de stockage d'un historique d'informations relevées par les moyens (9, 10, 11, 12, 13) de surveillance et/ou de commande, et **en ce qu'**au moins une tâche paramétrée comprend la mémorisation de ces informations.

20. Procédé de contrôle selon l'une quelconque des revendications 15 à 19, **caractérisé en ce qu'**au moins une tâche paramétrée comprend l'activation d'une procédure d'alarme.

21. Procédé de contrôle selon l'une quelconque des revendications 15 à 20, **caractérisé en ce que** l'unité centrale (14) exécute des tâches programmées et **en ce qu'**au moins une tâche paramétrée fait appel à au moins une tâche programmée.

## Patentansprüche

1. Vorrichtung (1) zur Steuerung einer Anlage (2) mit Vorrichtungen (9, 10, 11, 12, 13) zur Überwachung und/oder Steuerung des Betriebs der Anlage (2) und einer zentralen Informationsverarbeitungseinheit (14), wobei die Vorrichtung dafür eingerichtet ist, mit Überwachungs- und/oder Steuervorrichtungen (9, 10, 11, 12, 13) zu kommunizieren, um Informationen bezüglich des Betriebs der Anlage (2) abzufragen, zu schicken und/oder zu verarbeiten, **dadurch gekennzeichnet, dass** die zentrale Einheit (14) eine Speichervorrichtung (16) für zumindest eine parametrierte Aufgabe umfasst, die auf die Informationen bezüglich des Betriebs der Anlage (2) einwirkt, eine Vorrichtung zur Speicherung (17) zumindest einer Tabelle (30; 35, 40; 50; 60), wobei jede Tabelle (30; 35, 40; 50; 60) einer parametrierten Aufgabe zugeordnet ist und Werte der Parameter der betreffenden Aufgabe zu deren Ausführung aufweist, und, verbunden mit jeder Speichervorrichtung (16, 17), Vorrichtungen (15) zur Ausführung der parametrierten Aufgaben unter Verwendung der während der Ausführung der parametrierten Aufgaben in der oder den Tabelle(n) gespeicherten Werte.

2. Steuervorrichtung gemäß Anspruch 1, **dadurch gekennzeichnet, dass** zumindest ein Wert eines Parameters einer parametrierten Aufgabe ein Zeiger ist.

3. Steuervorrichtung gemäß Anspruch 1 oder 2, **dadurch gekennzeichnet, dass** sie, verbunden mit den Vorrichtungen (15) zur Ausführung der Aufgaben, einen Speicher (18) für die Reihenfolge aufweist, gemäß welcher die parametrierten Aufgaben in einer Schleife ohne Ausgang und unter Definierung einer allgemeinen Steueraufgabe auszuführen sind.

4. Steuervorrichtung gemäß irgendeinem der Ansprüche 1 bis 3, **dadurch gekennzeichnet, dass** eine parametrierte Aufgabe Anforderungen zur Abfrage von Informationen durch die Vorrichtungen (9, 10, 11, 12, 13) zur Überwachung und/oder Steuerung des Betriebs der Anlage (2) umfasst.

5. Steuervorrichtung gemäß irgendeinem der Ansprüche 1 bis 4, **dadurch gekennzeichnet, dass** eine parametrierte Aufgabe Befehle umfasst, die für die Überwachungs- und/oder Steuervorrichtungen (9, 10, 11, 12, 13) bestimmt sind.

6. Steuervorrichtung gemäß irgendeinem der Ansprüche 1 bis 5, **dadurch gekennzeichnet, dass** sie Vorrichtungen (24) zur Speicherung eines von den Überwachungs- und/oder Steuervorrichtungen (9, 10, 11, 12, 13) abgefragten Informationsberichtes aufweist, und dass zumindest eine parametrierte Aufgabe die Speicherung dieser Informationen in den Speichervorrichtungen umfasst.

7. Steuervorrichtung gemäß irgendeinem der Ansprüche 1 bis 6, **dadurch gekennzeichnet, dass** zumindest eine parametrierte Aufgabe die Aktivierung einer Alarmprozedur umfasst.

8. Steuervorrichtung gemäß irgendeinem der Ansprüche 1 bis 7, **dadurch gekennzeichnet, dass** sie Kommunikationsvorrichtungen (19) aufweist, die dafür eingerichtet sind, Informationen bezüglich des Betriebs der Anlage mit wenigstens einem in Abstand von der Anlage (2) angeordneten Überwachungszentrum (20A, 20B) auszutauschen, und dass eine parametrierte Aufgabe die Informationsübermittlung umfasst.

9. Steuervorrichtung gemäß Anspruch 8, **dadurch gekennzeichnet, dass** die parametrierte Aufgabe zur Informationsübermittlung die Übermittlung zumindest eines Alarms umfasst.

10. Steuervorrichtung gemäß Anspruch 8 oder 9, **dadurch gekennzeichnet, dass** die Kommunikationsvorrichtungen (19) Vorrichtungen (21) zur Auswahl von zu versendenden Informationen aufweisen.

11. Steuervorrichtung gemäß Anspruch 10, **dadurch gekennzeichnet, dass** die Auswahlvorrichtungen (21) Vorrichtungen (22) umfassen zur Durchführung eines mathematischen Algorithmus zum Vergleich der zu versendenden Informationen mit den entsprechenden Informationen, welche in dem oder jedem Überwachungszentrum (20A, 20B) verfügbar sind, und Vorrichtungen (23) zur Neinschaltung einer Informationsübertragung, die von den Vorrichtungen (22) zur Durchführung eines mathematischen Vergleichsalgorithmus gesteuert sind.

12. Steuervorrichtung gemäß irgendeinem der Ansprüche 1 bis 11, **dadurch gekennzeichnet, dass** die zentrale Einheit (14) Vorrichtungen (25) zur Durchführung programmierter Aufgaben umfasst, und dass zumindest eine parametrierte Aufgabe zumindest eine programmierte Aufgabe betrifft.

13. Steuervorrichtung gemäß Anspruch 13, **dadurch gekennzeichnet, dass** die Vorrichtungen (25) zur Durchführung programmierter Aufgaben mit Vorrichtungen (24) zur Informationsspeicherung verbunden sind, um Verarbeitungen an den in diesen Vorrichtungen gespeicherten Informationen durchzuführen.

14. Steuervorrichtung gemäß Anspruch 12 oder 13, **dadurch gekennzeichnet, dass** sie einen Mikrocomputer mit einem Speicher zur Speicherung der Tabellen (30; 35, 40; 50, 60) und parametrierten Aufgaben umfasst und zumindest eine Kupplungsschnittstelle mit den Vorrichtungen zur Überwachung und/oder Steuerung des Betriebs der Anlage (2) sowie eine Kommunikationsschnittstelle mit dem oder jedem beabstandeten Überwachungszentrum (20A, 20B), und wobei in der Steuervorrichtung ein Programm geladen ist, welches einerseits dafür eingerichtet ist, die programmierten Aufgaben und die parametrierten Aufgaben unter Verwendung der in der oder den Tabelle(n) gespeicherten parametrierten Werte auszuführen, und andererseits die zu versendenden Informationen auszuwählen.

15. Steuerverfahren für eine Anlage (2), welches Vorrichtungen (9, 10, 11, 12, 13) zur Überwachung und/oder Steuerung des Betriebs der Anlage (2) und eine zentrale Informationsverarbeitungseinheit (14) einsetzt, und welches dafür eingerichtet ist, mit den Überwachungs- und/oder Steuervorrichtungen (9, 10, 11, 12, 13) zu kommunizieren, um Informationen bezüglich des Betriebs der Anlage (2) abzufragen, zu schicken und/oder zu verarbeiten, **dadurch gekennzeichnet, dass** es die Schritte aufweist:
- Speicherung in einer zentralen Einheit (14) von zumindest einer parametrierten Aufgabe, die auf die Informationen bezüglich des Betriebs der Anlage (2) einwirkt,
- Speicherung in der zentralen Einheit (14) von zumindest einer Tabelle (30; 35, 40; 50; 60), wobei jede Tabelle (30; 35, 40; 50; 60) einer parametrierten Aufgabe zugeordnet ist und Werte der Parameter der betreffenden Aufgabe zu deren Ausführung aufweist, und
- Ausführung der parametrierten Aufgaben unter Verwendung der während der Ausführung der parametrierten Aufgaben in der oder den Tabelle(n) gespeicherten Werte.

16. Steuerverfahren gemäß Anspruch 15, **dadurch gekennzeichnet, dass** zumindest ein Wert eines Parameters einer parametrierten Aufgabe ein Zeiger ist.

17. Steuerverfahren gemäß Anspruch 15 oder 16, **dadurch gekennzeichnet, dass** eine parametrierte Aufgabe Anforderungen zur Abfrage von Informationen durch die Vorrichtungen (9, 10, 11, 12, 13) zur Überwachung und/oder Steuerung des Betriebs der Anlage (2) umfasst.

18. Steuerverfahren gemäß irgendeinem der Ansprüche 15 bis 17, **dadurch gekennzeichnet, dass** eine parametrierte Aufgabe Befehle umfasst, die für die Überwachungs- und/oder Steuervorrichtungen (9, 10, 11, 12, 13) bestimmt sind.

19. Steuerverfahren gemäß irgendeinem der Ansprüche 15 bis 18, **dadurch gekennzeichnet, dass** es einen Schritt der Speicherung eines von den Überwachungs- und/oder Steuervorrichtungen (9, 10, 11, 12, 13) abgefragten Informationsberichtes aufweist, und dass zumindest eine parametrierte Aufgabe die Speicherung dieser Informationen umfasst.

20. Steuerverfahren gemäß irgendeinem der Ansprüche 15 bis 19, **dadurch gekennzeichnet, dass** zumindest eine parametrierte Aufgabe die Aktivierung einer Alarmprozedur umfasst.

21. Steuerverfahren gemäß irgendeinem der Ansprüche 15 bis 20, **dadurch gekennzeichnet, dass** die zentrale Einheit (14) programmierte Aufgaben ausführt, und dass zumindest eine parametrierte Aufgabe zumindest eine programmierte Aufgabe betrifft

## Claims

1. Device (1) for controlling an installation (2) comprising means (9, 10, 11, 12, 13) of monitoring and/or controlling the operation of the said installation (2) and a central data processing unit (14), adapted to communicate with the said monitoring and/or controlling means (9, 10, 11, 12, 13) to record, send and/or process data concerning the operation of the installation (2), **characterised in that** the central unit (14) comprises means (16) of storing at least one parametrised task acting on the said data concerning the operation of the installation (2), means (17) of memorising at least one table (30; 35, 40; 50; 60), each table (30; 35, 40; 50; 60) being associated with a parametrised task and comprising figures for the parameters of the task in question for the latter to be carried out and, connected with each memorising means (16, 17), means (15) of performing the said parametrised tasks by using the said figures stored in the said table or tables at the time of performing the said parametrised tasks.

2. Controlling device according to Claim 1, **characterised in that** at least one figure of a parameter of a parametrised task is a time checker.

3. Controlling device according to Claim 1 or 2, **characterised in that** it comprises, connected to the means (15) of performing the tasks, a memory (18) of a sequence whereby the parametrised tasks must be performed in a closed loop and defining a general control task.

4. Controlling device according to any one of the Claims 1 to 3, **characterised in that** a parametrised task includes requests for recording data by the said means (9, 10, 11, 12, 13) of monitoring and/or controlling the operation of the said installation (2).

5. Controlling device according to any one of the Claims 1 to 4, **characterised in that** a parametrised task includes orders intended for the said monitoring and/or control means (9, 10, 11, 12, 13).

6. Controlling device according to any one of the Claims 1 to 5, **characterised in that** it includes means (24) of storing historical data recorded by the monitoring and/or controlling means (9, 10, 11, 12, 13), and **in that** at least one parametrised task includes the memorising of such data in the storage means.

7. Controlling device according to any one of the Claims 1 to 6, **characterised in that** at least one parametrised task comprises the activation of an alarm procedure.

8. Controlling device according to any one of the Claims 1 to 7, **characterised in that** it comprises means (19) of communication adapted to exchange data relating to the operation of the installation with at least one remote monitoring centre (20A, 20B) of the said installation (2), and **in that** one parametrised task comprises the transmission of data.

9. Controlling device according to Claim 8, **characterised in that** the parametrised task of sending data includes the transmission of at least one alarm.

10. Controlling device according to Claim 8 or 9, **characterised in that** the means of communication (19) comprise means (21) of selecting the data to be sent.

11. Controlling device according to Claim 10, **characterised in that** the said means of selection (21) include means (22) of carrying out a mathematical algorithm of comparison of the data to be sent with the corresponding data which are available in the monitoring centre or each monitoring centre (20A, 20B) and means (23) of inhibiting a transmission of data ordered by the said means (22) of carrying out the mathematical algorithm of comparison.

12. Controlling device according to any one of the Claims 1 to 11, **characterised in that** the central unit (14) includes means (25) of performing programmed tasks and **in that** at least one parametrised task calls upon at least one programmed task.

13. Controlling device according to Claim 13, **characterised in that** the means (25) of performing the programmed tasks are connected to the data storage means (24) for carrying out operations on the data stored in the latter.

14. Controlling device according to Claim 12 or 13, **characterised in that** it has a microcomputer including a memory for storing the said tables (30; 35, 40; 50; 60) and parametrised tasks, and at least an interface for coupling to the said means for monitoring and/or controlling the operation of the said installation (2) as well as an interface for communication with the or. each remote monitoring centre (20A, 20B), and in which a program is loaded suitable on the one hand for performing programmed tasks and the parametrised tasks using the said parametrised figures memorised in the said table or tables, and on the other hand for selecting the data to be sent.

15. Method of controlling an installation (2) using means (9, 10, 11, 12, 13) for monitoring and/or controlling the operation of the said installation (2) and a central data processing unit (14), adapted to communicate with the said monitoring and/or controlling means (9, 10, 11, 12. 13) to record, send and/or handle data concerning the operation of the installation (2), **characterised in that** it has the following stages:
- memorising in the central unit (14) at least one parametrised task acting on the said data concerning the operation of the installation (2),
- memorising in the central unit (14) at least one table (30; 35, 40; 50; 60), each table (30; 35, 40; 50; 60) being associated with a parametrised task and comprising the figures of the parameters of the task in question for performance of the latter, and
- carrying out the said parametrised tasks using the said figures memorised in the said table or tables at the time of performing the said parametrised tasks.

16. Method of control according to Claim 15, **characterised in that** at least one figure of a parameter of a parametrised task is a time checker.

17. Method of control according to Claim 15 or 16, **characterised in that** a parametrised task includes requests for recording data by the said means (9, 10, 11, 12, 13) of monitoring and/or controlling the operation of the said installation (2).

18. Method of control according to any one of the Claims 15 to 17, **characterised in that** one parametrised task includes orders intended for the said monitoring and/or controlling means (9, 10, 11, 12, 13).

19. Method of control according to any of the Claims 15 to 18, **characterised in that** it includes a stage for storing historical data recorded by the monitoring and/or controlling means (9, 10, 11, 12, 13), and **in that** at least one parametrised task includes the memorising of such data.

20. Method of control according to any one of the Claims 15 to 19, **characterised in that** at least one parametrised task includes the activation of an alarm procedure.

21. Method of control according to any one of the Claims 15 to 20, **characterised in that** the central unit (14) carries out programmed tasks and **in that** at least one parametrised task calls upon at least one programmed task.
